Europäisches Patentamt

European Patent Office

Office européen des brevets

(19)

(11) Numéro de publication: **0 091 359**

A1

(12) # DEMANDE DE BREVET EUROPEEN

(21) Numéro de dépôt: **83400649.6**

(22) Date de dépôt: **29.03.83**

(51) Int. Cl.³: **F 02 D 5/02**
**F 02 M 59/30**

(30) Priorité: **29.03.82 FR 8205294**

(43) Date de publication de la demande:
**12.10.83 Bulletin 83/41**

(84) Etats contractants désignés:
**AT BE CH DE GB IT LI NL SE**

(71) Demandeur: **RENAULT SPORT**
**1/15, Avenue du Président Kennedy**
**F-91170 Viry-Chatillon(FR)**

(72) Inventeur: **Boudy, Jean-Pierre**
**2, rue des Pâtis**
**F-91540 Mennecy(FR)**

(72) Inventeur: **Coquery, Jean**
**19, rue de Fresnes**
**F-92160 Antony(FR)**

(74) Mandataire: **Colas, Jean-Pierre et al,**
**Regie Nationale des Usines RENAULT (S.0804)**
**F-92109 Boulogne Billancourt Cedex(FR)**

(54) Dispositif de régulation électronique directe de pompe d'injection pour un moteur thermique.

(57) Dispositif de régulation de l'alimentation en carburant d'un moteur à combustion interne suralimenté par l'énergie des gaz d'échappement et agissant sur un organe approprié tel qu'au moins un groupe turbo-compresseur et du type comportant une pompe d'injection où la course des pistons d'injection est réglée par un plateau de butée dont la position est contrôlée en fonction de la masse d'air admise par cycle dans les cylindres du moteur.

Le plateau de butée 8 est positionné par l'intermédiaire d'un moteur électrique 40 alimenté par un circuit électronique de calcul et de contrôle 53 sensible à la masse d'air admise par cycle dans les cylindres du moteur, tandis que sa position est repérée par un moyen électrique et/ou électronique adéquat, tel qu'un potentiomètre de recopie 24.

Application au réglage du débit des pompes d'injection en fonction de la masse réelle d'air admise par cycle, en particulier en vue de la marche en mélange pauvre à puissance élevée et d'un meilleur réglage de la richesse pendant les phases transitoires.

./...

EP 0 091 359 A1

FIG.1

DISPOSITIF DE REGULATION ELECTRONIQUE
·DIRECTE DE POMPE D'INJECTION POUR UN
MOTEUR THERMIQUE

La présente invention s'applique à l'alimentation en carburant d'un moteur à combustion interne, du type comportant une pompe d'injection où la course des pistons d'injection est réglée par un plateau de butée de point mort bas des pistons d'injection.

Les pompes d'injection de .type courant comportent en général, dans un corps de pompe: un arbre à came d'actionnement de la pompe agissant sur des poussoirs reliés à des pistons de pompe mobiles dans des alésages et rappelés en position par des ressorts ou par la pression d'alimentation de la pompe. La circulation du carburant dans les cylindres de la pompe constitués par les alésages de guidage des pistons, est contrôlée par des clapets d'aspiration et de refoulement tandis que le débit refoulé à chaque actionnement des pistons par l'arbre à came, est contrôlé par une came de réglage généralement dénommée "came de contrôle tridimensionnelle". Cette camme de réglage se déplace en effet longitudinalement sous l'action de la tirette d'accélérateur du moteur et subit, en même temps, un réglage par rotation autour de son axe sous l'action de la pression relative de l'air au collecteur d'admission agissant sur un piston à l'encontre d'un ressort de rappel. La surface active de la came se déplace ainsi dans l'espace tout en restant en contact ponctuel avec le palpeur d'un plateau de butée de point mort bas des pistons de pompe et le débit de carburant par coup de piston est réglé en fonction de l'accélération demandée par le conducteur (et matérialisée par l'ouverture du papillon des gaz) et respectivement de la pression d'admission de l'air dans les cylindres du moteur.

Ce système de réglage des pompes d'injection donne satisfaction sur le plan mécanique mais exige des efforts d'actionnement importants; en particulier, pour les pompes d'injection comportant un grand nombre de cylindres telles que celles utilisées pour l'alimentation des voitures de compétition. Ces efforts d'actionnement pour vaincre les frottements internes, nuisent à la sensibilité de la commande et finissent par provoquer, sous l'effet des vibrations du moteur, des grippages qui conduisent au blocage du réglage de la pompe d'injection.

La forme de la came apparaît très difficile à déterminer, à réaliser et à mettre au point, en particulier pour les moteurs à haute performance, car il faut tenir compte de son déplacement dans les trois dimensions de l'espace pour la calibrer selon ses diverses sections.

Par ailleurs, le réglage du débit de carburant, en fonction de l'ouverture du papillon des gaz et donc de l'accélération demandée par le conducteur et en fonction de la pression d'admission de l'air au moteur, ne permet pas de prendre en compte, surtout pendant les phases transitoires, tous les paramètres qui régissent le débit d'air aspiré par le moteur et la richesse du mélange carburé. En effet, le débit massique d'air entrant dans les cylindres est, non seulement proportionnel à sa pression absolue d'admission, mais aussi inversement proportionnel à sa température absolue. Le débit d'air réellement aspiré par les cylindres est également fonction de la vitesse de rotation du moteur et la richesse du mélange carburé peut varier dans des limites assez larges sans perturber sensiblement l'allumage, les mélanges pauvres donnant les meilleurs rendements du moteur mais aussi les températures d'échappement les plus élevées, susceptibles, dans le cas d'un moteur suralimenté par turbo-compresseur, d'en dégrader la turbine.

De plus, dans les moteurs suralimentés les plus performants en puissance et dotés d'un réfrigérant de l'air comprimé de suralimentation, un volume d'air important est interposé entre la sortie du compresseur et l'admission des cylindres et ce volume est soumis à des pulsations rythmées par le régime du moteur à des fréquences voisines des fréquences propres du circuit ce qui perturbe encore plus la richesse du mélange dans les phases transitoires de reprise de puissance. Pour mieux régler la richesse du mélange au cours de ces phases transitoires de reprise, il apparaît nécessaire de faire intervenir dans le réglage du débit de carburant par coup de piston, la pression d'échappement à l'amont de l'organe moteur de suralimentation, telle qu'une turbine de détente des gaz d'échappement.

L'un des buts de la présente invention est précisément de supprimer les risques de blocage de la commande d'accélération par le système de réglage de la pompe d'injection tout en permettant de mieux intégrer, dans le système de contrôle du débit de carburant, les divers paramètres de fonctionnement du moteur. Par l'interposition de relais électroniques et électromécaniques entre les capteurs des paramètres du moteur et respectivement le moteur de réglage du plateau de butée de point mort bas, la commande est mieux amortie et le dispositif de réglage selon l'invention se propose également d'améliorer la sensibilité et la stabilité du réglage de la richesse du mélange carburé quelles que soient les accélérations du moteur, en particulier dans les phases transitoires tout en réduisant l'encombrement de la pompe d'injection.

A cet effet, le dispositif de régulation de l'alimentation en carburant d'un moteur à combustion interne, du type comportant une pompe d'injection où la course des pistons d'injection est réglée par un plateau de butée dont la position est contrôlée en fonction de la masse d'air admise par cycle dans les cylindres du moteur, est caractérisé en ce que le plateau de butée est positionné par l'intermédiaire d'un moteur électrique alimenté par un circuit électronique de calcul et de contrôle sensible à la masse d'air admise par cycle dans les cylindres du moteur, tandis que sa position est repérée par un moyen électrique et/ou électronique, tel qu'un potentiomètre de recopie, apte à retransmettre, en permanence au circuit électronique, la position du plateau.

Le circuit électronique de calcul et de contrôle, pour assurer le réglage de la position du plateau, reçoit les informations relatives aux paramètres suivants :

- pression absolue de l'air à l'entrée du moteur,
- température de l'air à l'entrée du moteur,
- vitesse de rotation du moteur,
- pression absolue des gaz d'échappement à la sortie du moteur.

Selon une caractéristique importante de l'invention, dans le cas où le moteur à combustion interne est suralimenté par l'énergie des gaz d'échappement agissant sur un organe approprié tel qu'au moins un groupe turbo-compresseur, le circuit électronique reçoit, en plus, l'information relative à la température des gaz d'échappement à l'entrée de l'organe de suralimentation, tel que la turbine du turbo-compresseur, et commande une augmentation de la richesse en carburant du mélange carburé introduit dans les cylindres du moteur, lorsque la température des gaz d'échappement dépasse une valeur de consigne. On peut également intégrer dans le circuit, le cas échéant, des informations plus détaillées sur la qualité de la combustion et telles que le taux d'oxydes de carbone et/ou d'azote et/ou d'imbrûlés et/ou de fumées, ces dernières informations concernant plus particulièrement le réglage de l'injection des moteurs diésel suralimentés.

L'information de pression de l'air à l'entrée du moteur est acquise à l'aide d'un capteur tel qu'un capteur piézo-résistif et traitée dans un amplificateur opérationnel apte à ajuster sa tension de sortie proportionnellement à la pression absolue de l'air.

La tension de sortie de l'amplificateur opérationnel est adressée à un organe sommateur qui ajoute à cette tension de sortie une tension de correction délivrée par une chaîne de traitement et de calcul qui reçoit l'information de pression des gaz d'échappement et la transmet à un autre amplificateur à gain variable sensible à l'information de vitesse de rotation du moteur par l'intermédiaire d'une résistance de contre-réaction variable. La tension de sortie de l'organe sommateur est amplifiée dans un amplificateur à gain variable dans lequel la résistance de la boucle de contre-réaction est fonction de la température de l'air à l'entrée du moteur, par tout moyen approprié tel que le montage dans la boucle de contre-réaction d'une thermistance sensible à cette température à l'entrée du moteur.

Pour introduire le régime moteur dans le circuit électronique, l'amplificateur à gain variable comporte à son entrée inverse une résistance variable en fonction de la vitesse de rotation du moteur.

L'information issue de l'amplificateur opérationnel est adressée à un comparateur de coupure de l'information relative à la température des gaz d'échappement à l'entrée de l'organe de suralimentation et adressée sous forme de signal de température d'échappement à un comparateur pour être comparée à une valeur de température de consigne, cette comparaison déclenchant, lorsque la pression absolue de l'air à l'entrée du moteur dépasse une valeur minimale, l'application à l'amplificateur opérationnel fonctionnant en sommateur avec l'information de pression d'un signal proportionnel au dépassement de cette température de consigne par la température des gaz d'échappement.

La sortie de l'amplificateur à gain variable est reliée, après ajustement éventuel du point zéro et du gain global dans un amplificateur de gain, à un organe comparateur travaillant en boucle ouverte et apte à comparer l'information issue de l'amplificateur de gain avec l'information de position du plateau délivrée par le potentiomètre de recopie, pour produire un signal d'actionnement du moteur électrique de déplacement du plateau, signal dont la polarité de la tension détermine la rotation du moteur dans le sens propre à supprimer le signal d'actionnement.

Selon une autre caractéristique du circuit électronique selon l'invention, l'information de position délivrée par le potentiomètre de recopie, est dérivée et réinjectée par tout moyen tel qu'un condensateur, dans l'amplificateur à gain variable en vue d'amortir les déplacements du moteur électrique. Une fréquence de forme générale triangulaire et sensiblement de l'ordre du kilohertz (kHz) est injectée dans l'amplificateur de gain pour augmenter l'impédance apparente du moteur électrique de déplacement du plateau afin de mieux stabiliser le moteur autour de sa position d'équilibre et de diminuer ainsi sa consommation électrique en service.

D'autres buts, avantages et caractéristiques de l'invention apparaîtront à la lecture de la description d'un mode de réalisation de l'invention appliquée à un moteur à combustion interne suralimenté par turbo-compresseur, faite à titre non limitatif et en regard du dessin annexé où :

- *la figure 1* représente, en vue schématique, les circuits de contrôle et de commande du plateau de butée de réglage du débit d'une pompe d'injection de carburant contrôlée par un circuit électronique de réglage ;

- *la figure 2* est un schéma synoptique du circuit électronique de contrôle du moteur de réglage du plateau de butée de la pompe ;

- *la figure 3* est un schéma de montage du circuit de réinjection des informations de position du plateau de butée dans le circuit électronique de contrôle ;

- *la figure 4* est un schéma de montage du circuit amplificateur et inverseur d'actionnement du moteur électrique de réglage.

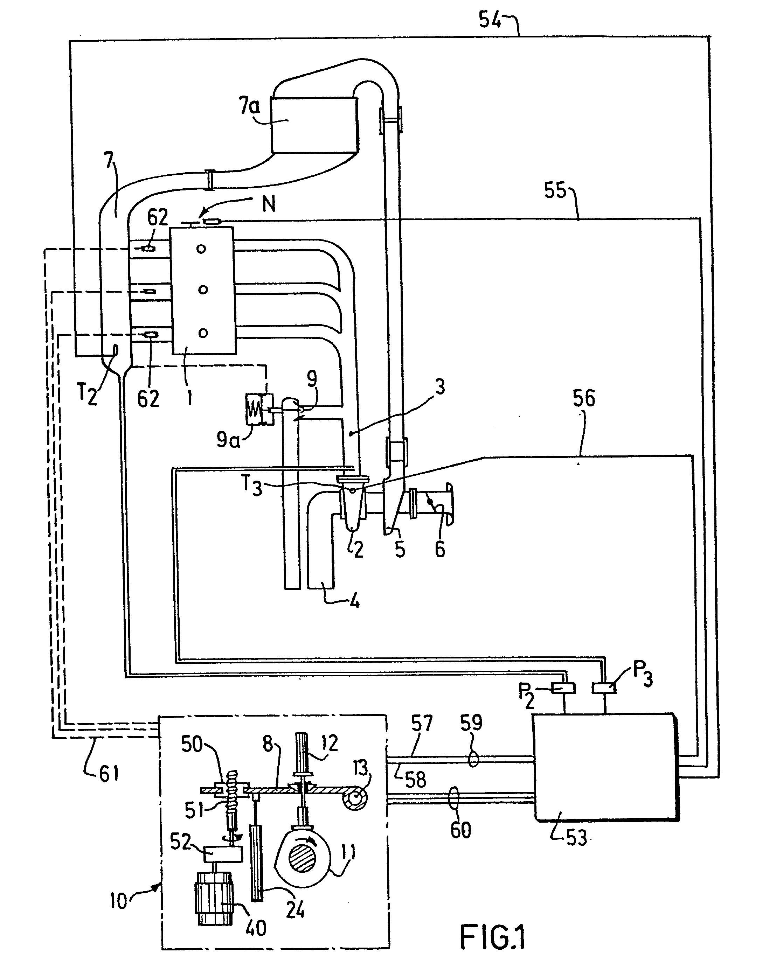

Selon le schéma de la figure 1, le moteur à combustion interne 1 est équipé d'une installation de suralimentation en air constituée d'une turbine centrifuge 2 dont le rotor, logé à l'intérieur d'une volute, est placé sur le trajet des gaz d'échappement d'un conduit 3 d'amenée à la turbine relié à des pipes d'échappement branchées directement sur la sortie des soupapes d'échappement du moteur. L'entrée de la turbine 2 est radiale et l'écoulement centripète des gaz d'échappement aboutit à une sortie axiale reliée à un conduit d'échappement 4 proprement dit. Le rotor de la turbine 2 est relié par un arbre supporté par un palier généralement lubrifié par la pression d'huile du moteur, à un rotor d'un compresseur 5 logé dans une volute et relié par une conduite d'entrée à des moyens spécifiques de réglage du débit d'air constitués, ici, par un volet de réglage 6.

Le rotor du compresseur 5, entraîné en rotation par le rotor de la turbine 2, refoule l'air de combustion du moteur vers un collecteur d'admission 7 qui débouche sur l'entrée des soupapes d'admission des cylindres du moteur 1 après refroidissement dans un échangeur de chaleur 7a.

Afin de limiter la pression d'admission dans le collecteur 7 et dans la chambre de combustion des cylindres, le circuit de la turbine 2 est muni d'un système de dérivation classique constitué d'un clapet de décharge 9 commandé par une capsule de régulation 9a sensible à la pression régnant dans le collecteur d'admission 7.

La partie 10 de pompe d'injection de carburant, représentée sur le schéma de la figure 1, fait apparaître (dans un corps de pompe non représenté et constitué de plusieurs pièces assemblées) un arbre à cames entraîné par le moteur 1 équipé de la pompe et dont la came 11 actionne un piston d'injection 12 qui refoule le carburant sous pression, à travers un clapet anti-retour non représenté, vers le moteur 1. Le réglage du débit de la pompe par coup de piston s'effectue par limitation du point mort bas du piston 12 à l'aide d'un plateau de butée 8 articulé sur un axe de butée fixe 13 et en appui mobile par l'intermédiaire d'un écrou 50 dans lequel est vissée la tige filetée 51 d'un arbre de commande susceptible d'être entraîné en rotation dans un sens ou dans l'autre, par l'intermédiaire d'un réducteur 52 sous l'action d'un moteur de réglage 40. La position du plateau de butée 8 est contrôlée, dans les pompes d'injection du type connu, par l'intermédiaire d'une came tridimensionnelle, par la timonerie d'accélérateur et par un piston d'équilibrage soumis sur l'une de ses faces à la pression d'admission de l'air à l'entrée des cylindres du moteur et sur l'autre face reliée à l'atmosphère, à la force de réaction d'un ressort taré, de telle sorte que, la rotation du plateau de butée par rapport à une position de départ est sensiblement proportionnelle à la surpression de l'air d'admission par rapport à l'atmosphère.

Selon l'invention, le réglage du plateau de butée 8 perturbé souvent par suite du coincement du piston d'équilibrage ou de s a crémaillère de commande dans son logement, s'effectue non plus par une came tridimensionnelle, mais directement à l'aide du moteur électrique 40 qui actionne, par l'intermédiaire du réducteur à engrenage 52, la tige filetée 51 en rotation entre deux positions de butée extrêmes, la position du plateau 8 étant repérée par un potentiomètre de recopie 24. Cet agencement permet en outre de supprimer la liaison entre la pédale d'accélérateur et la pompe d'injection de carburant qui, dans les dispositions classiques, entraîne une dureté excessive de la pédale d'accélérateur. L'actionnement du moteur 40 est contrôlé par un circuit électronique de réglage 53 non plus seulement sensible à la surpression de l'air à l'entrée dans les cylindres comme dans les pompes d'injection de type connu, mais qui constitue un véritable calculateur d'injection qui intègre les paramètres suivants:

- la pression absolue de l'air P2 à l'entrée dans le moteur 1. Cette pression P2 constitue un bien meilleur critère de réglage que la surpression dès que le moteur fonctionne en altitude,

- la température de l'air T2 à l'entrée du moteur 1. Cette information amenée au circuit 53 par un câble 54 constitue l'autre facteur de mesure du débit massique d'air à l'entrée du moteur,

- la vitesse de rotation N du moteur 1 qui conditionne aussi le débit massique d'air frais par coup de piston du moteur 1. Cette information N, captée de préférence sur le distributeur d'allumage du moteur 1 est amenée au circuit 53 par un câble 55,

- la température d'échappement T3 mesurée à l'entrée de la turbine 2 du turbo-compresseur. Cette mesure qui n'est pas indispensable pour le pilotage de l'injection, permet, par contre, d'agir sur la richesse du mélange carburé lorsque la température d'échappement augmente exagérément. L'information T3 est transmise au circuit 53 par un câble 56,

- la pression P3 des gaz d'échappement à l'entrée de la turbine 2.

Le circuit électronique de réglage 53 est relié par des câbles 57 et 58 et au moyen d'un connecteur 59 au moteur électrique 40 qui positionne le plateau de butée 8, tandis qu'un faisceau de câble 60 le relie au potentiomètre de recopie 24. Les clapets de refoulement non représentés de la pompe d'injection 10 sont raccordés chacun par des conduites d'injection 61 à un injecteur différent 62 des cylindres du moteur 1.

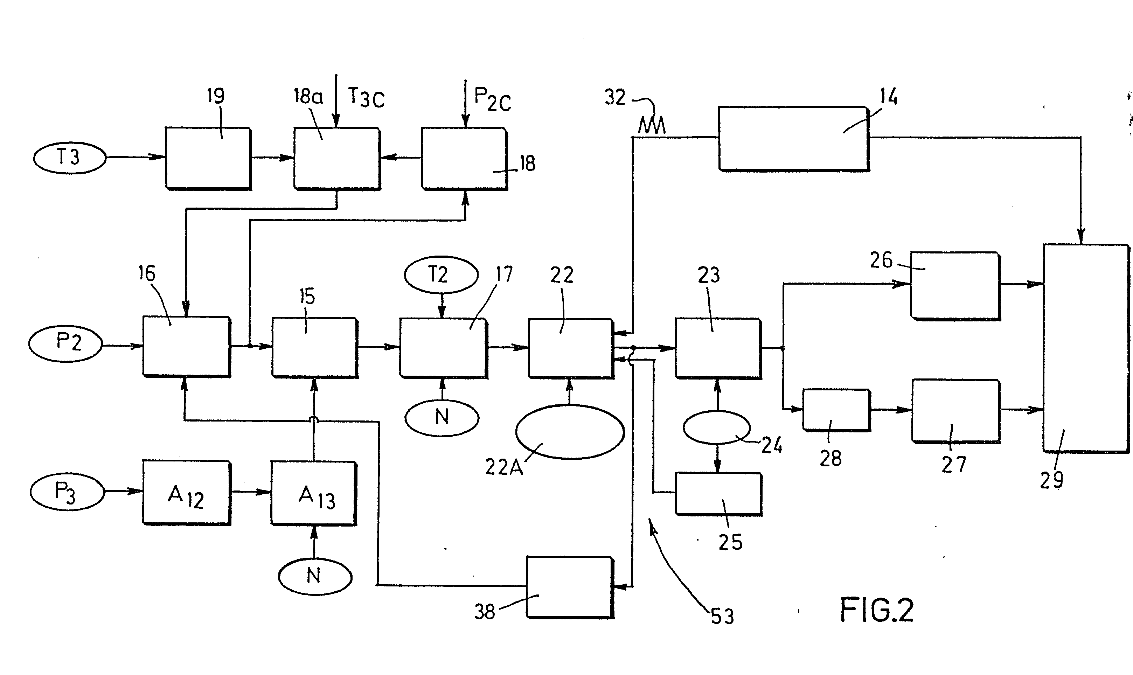

Le circuit électronique de contrôle et de réglage 53 dont le schéma synoptique est représenté sur la figure 2, comporte divers points d'entrée des paramètres du moteur 1 et un circuit d'alimentation extérieur 14.

L'information de pression absolue P2 à l'entrée du moteur 1 est acquise à l'aide d'un capteur piézo résistif et traitée dans un amplificateur opérationnel 16 dont la tension de sortie est ajustée à zéro pour une pression absolue nulle au capteur.

La tension de sortie de l'amplificateur opérationnel 16 est adressée à un organe sommateur 15 qui ajoute à cette tension de sortie une tension de correction délivrée par une chaîne de traitement et de calcul qui reçoit l'information de pression des gaz d'échappement P3 par tout moyen adéquat et qui ensuite l'ajuste au zéro de pression absolue dans un amplificateur A12 et la transmet à un amplificateur à gain variable A13 sensible à l'information de vitesse de rotation N du moteur par tout moyen adéquat tel que l'interposition d'une résistance de contre-réaction variable obtenue en commutant sur une résistance fixe des résistances de valeurs différentes en fonction de la vitesse de rotation du moteur.

La tension de sortie du sommateur 15 est ensuite amplifiée dans un amplificateur à gain variable 17 dans lequel la résistance de la boucle de contre-réaction est variable et fonction de la température d'admission de l'air T2 dans le moteur suralimenté. Cette résistance variable est obtenue grâce au montage dans cette boucle d'une thermistance placée à l'aval du réfrigérant d'air de suralimentation constitué par l'échangeur 7a. En outre, la variabilité du gain est également obtenue en modifiant la résistance d'attaque de l'entrée inverse de l'amplificateur 17 par commutation sur cette entrée d'un jeu de résistances dont les valeurs successives sont fonction du régime moteur.

L'information issue de l'amplificateur 16 est envoyée sur un comparateur de coupure 18 de l'information de température des gaz d'échappement T3 à l'entrée de la turbine du turbo-compresseur.L'information de température T3 n'est pas prise en compte si la valeur de la pression P2 issue de l'amplificateur 16 est inférieure à une valeur de consigne P2c.Cette information de température de turbine T3 est amplifiée à travers un amplificateur 19 et comparée à une valeur de consigne T3c dans un comparateur 18a. Lorsque P2 est supérieur à P2c, l'amplificateur opérationnel 16 joue le rôle d'un sommateur en ajoutant, à l'information de pression absolue, une valeur proportionnelle au dépassement de la température de consigne T3c.

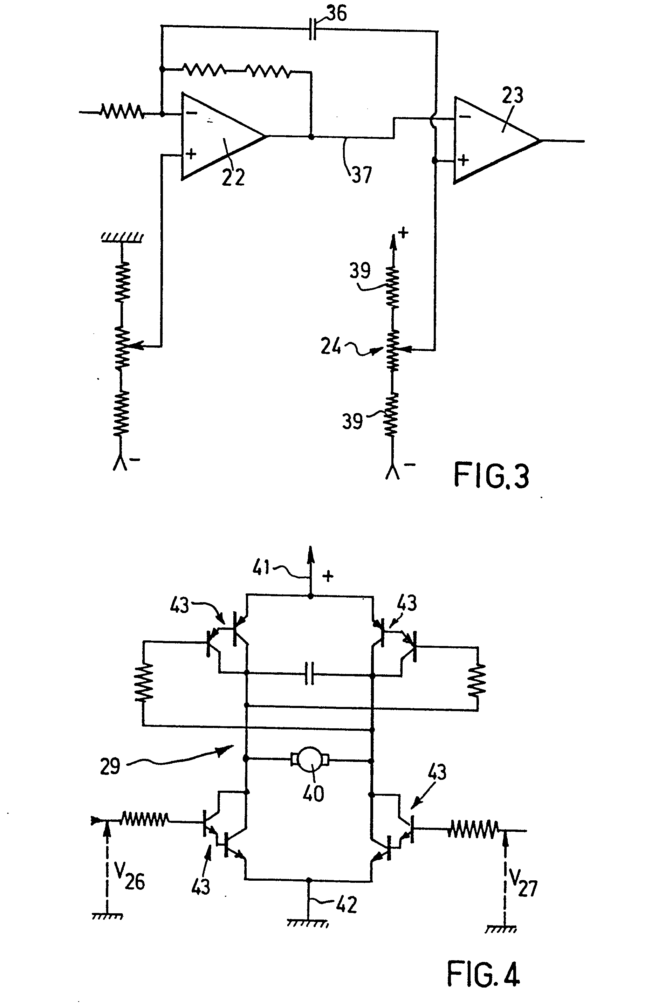

L'information issue de l'amplificateur 17 qui reçoit les indications de température d'air T2 à l'admission dans le moteur et les signaux de vitesse de rotation du moteur N injectés par le jeu de résistances variables et captés par tout moyen adéquat, tel qu'un compteur électronique branché sur le circuit d'allumage du moteur, est ensuite traitée dans un amplificateur de gain 22 permettant d'ajuster le zéro et le gain global de la chaîne de calcul avant l'attaque d'un comparateur 23 travaillant en boucle ouverte. Le comparateur 23 compare l'information issue de l'amplificateur 22 avec celle fournie par le potentiomètre de recopie 24 de la position du plateau de butée 8 de la pompe. Un circuit d'amortissement 25 qui sera décrit plus loin en regard de la figure 3,réinjecte une partie du signal de recopie dans l'amplificateur de gain 22 doté de circuits 22a de réglage du gain et du zéro.

Le comparateur 23 alimente deux circuits conditionneurs 26 et 27 (l'un de ces circuits 26 étant alimenté directement et l'autre via un inverseur 28) d'un amplificateur 29 de l'alimentation du moteur 40 de positionnement du plateau 8. Cet amplificateur 29 forme un pont de commande du sens et de la durée de marche du moteur et sera décrit plus en détail en regard de la figure 4.

Le circuit d'alimentation extérieur 14 comporte une source électrique constituée, par exemple, par la batterie du véhicule équipé du système de contrôle d'injection de carburant selon l'invention, ainsi qu'une alimentation stabilisée vers les divers amplificateurs. Le circuit 14 fournit, en outre, un signal triangulaire 32 à une fréquence de l'ordre du kilohertz, par exemple 1,2 kHz dans l'exemple de réalisation choisi. Ce signal triangulaire 32 obtenu, via un multivibrateur et un intégrateur sous le contrôle d'un régulateur, est injecté par un circuit convenable dans l'amplificateur de gain 22, en vue de mieux stabiliser le moteur 40 autour de sa position d'équilibre et de diminuer sa consommation en augmentant son impédance d'entrée. Le moteur est ainsi alimenté par de courtes impulsions de courant et se déplace presque pas à pas d'une position d'équilibre à l'autre.

Le circuit d'amortissement 25 représenté sur la figure 3, peut être intercalé entre l'amplificateur de gain 22 et le comparateur 23. Le potentiomètre de recopie 24 alimenté entre deux tensions stabilisées opposées, par exemple +8 Volts et -8 Volts pour une batterie de 12 Volts, est couplé par un condensateur 36 à l'entrée négative de l'amplificateur 22.
On doit remarquer également que la liaison 37, entre l'amplificateur 22 et le comparateur 23, est représentée, sur le schéma synoptique de la figure 2, reliée à un limiteur de course 38 du moteur couplé à une entrée de l'amplificateur 16. Ce limiteur de course 38 peut être constitué par des résistances dites de butée 39, placées aux extrémités du potentiomètre 24 et dont la valeur est de l'ordre du dixième de celle du potentiomètre de recopie lui-même. Le condensateur 36 dont la capacité est, par exemple de l'ordre de 0,3 μF, réinjecte sur l'amplificateur 22 la dérivée du mouvement de rotation du plateau 8, dont l'image est captée sur le potentiomètre de recopie 24.

L'amplificateur 29, représenté sur la figure 4, a pour but d'amplifier en courant les tensions de commande V26 et V27 reçues des circuits conditionneurs direct 26 et inverse 27 et de changer le sens de circulation de ce courant à travers le moteur 40, selon que la tension de commande vient du conditionneur 26 ou du conditionneur 27. La source de courant, pour l'actionnement du moteur 40, est constituée par la batterie du circuit d'alimentation 14 dont le pôle positif est amené en 41 sur le circuit de l'amplificateur 29 relié à la masse en 42. Les interrupteurs du pont de commande du moteur 40 sont constitués par des cascades de tran - sistors en montage de Darlington 43, permettant un grand gain en courant pour une grande impédance d'entrée.

Le fonctionnement du dispositif de régulation de la pompe d'injection va maintenant être explicité. Au démarrage du moteur 1, la surpression à l'admission du moteur est nulle, la température d'entrée de l'air est sensiblement la température atmosphérique, la vitesse de rotation du moteur est nulle et la température d'échappement est faible. Le circuit électronique 53 place le moteur 40 au repos en position de butée basse.

Après le démarrage du moteur 1 et dès que des informations significatives N, P3 sont délivrées, le circuit électronique 53 est activé et des impulsions de courant délivrées à travers les cascades de transistors 43 actionnent le moteur 40 qui déplace le plateau de butée 8 vers une nouvelle position d'équilibre qui augmente le débit de carburant par coup de piston d'injection 12, et donc par coup de piston du moteur 1. L'augmentation de la température de l'air à l'admission du moteur introduite en T2 dans l'amplificateur 17 fait déplacer le plateau 8 pour réduire le débit de carburant par coup de piston. Par contre, la vitesse de rotation N du moteur thermique se traduit par la sélection d'une résistance donnée d'un ensemble de résistances dont la valeur détermine la correction à apporter au débit de carburant en fonction du remplissage en air frais des cylindres du moteur à cette vitesse de rotation.

Un aspect intéressant et original du réglage par le circuit électronique réside dans la possibilité de doser le carburant en mélange pauvre pour améliorer le rendement du moteur ainsi que son temps de réponse. Toutefois, la marche en mélange pauvre présente l'inconvénient pour les moteurs à turbo-compresseur d'induire des températures d'échappement plus élevées à l'entrée de la turbine. Le circuit électronique introduit dans le comparateur 18a la température des gaz d'échappement T3 à l'entrée de la turbine du turbo-compresseur et la compare à une valeur de consigne T3c. Lorsque la température d'échappement est supérieure à la valeur de consigne, et si P2 est supérieur à P2c, le comparateur 18a transmet à l'amplificateur 16 un signal de correction proportionnel au dépassement de la température de consigne et qui s'ajoute à l'information de pression absolue de l'air pour provoquer, par déplacement du plateau de butée 8, un enrichissement du mélange carburé qui tend à stabiliser la température d'échappement au voisinage de la valeur de consigne choisie à une valeur inférieure à celle pour laquelle la température de la turbine commence à présenter un danger de dégradation.

En service normal du moteur 1, le circuit électronique 53 positionne le plateau de retenue 8 par une marche pas à pas du moteur 40 de telle façon que la richesse du mélange carburé introduit dans les cylindres soit contrôlée par la fonction :

$$\frac{\varphi(N)}{T_2} \; [\, P_2 \; (t,T_3) - \alpha \; (N) \; P_3\,]$$

pour laquelle :

$\varphi(N)$ et $\alpha$ (N) sont des fonctions du régime de rotation N du moteur 1 et la grandeur électrique représentative de la pression P2 est modifiée par la température T3 au cours du temps t. Cette correction garantit l'utilisation d'un mélange pauvre pour lequel la température des gaz à l'entrée turbine est élevée. L'énergie disponible pour réaccélérer le rotor du turbo-compresseur est plus importante et le temps de réponse est réduit. Le mélange carburé est enrichi pour des pressions P2 supérieures à une pression de référence et des températures T3 supérieures à une température de consigne, l'enrichissement étant proportionnel au dépassement de température, ceci afin d'éviter la destruction de la turbine 2.

L'intervention de la pression d'échappement P3 dans le circuit électronique de réglage 53 s'effectue par injection du signal P3 sur l'amplificateur à gain variable A13 qui permet de réaliser une tension image de la fonction :

$$\alpha \cdot (N) \cdot P_3$$

en modifiant la résistance de la boucle de contre-réaction de l'amplificateur par l'intermédiaire de résistances fonction du régime moteur N et commutées en parallèle sur une résistance fixe.

La fonction P2 (t, T3) - $\alpha$ (N) P3 est représentative de la masse d'air admise dans les cylindres du moteur thermique dans les conditions de régime moteur N, de pression d'admission P2 et de pression d'échappement P3, ce qui permet de s'affranchir de toute mesure de la position du papillon des gaz pour la commande directe de la pompe d'injection.

Le réglage de la richesse par le circuit électronique pourrait également comporter une injection de signaux de détection de cliquetis aptes à provoquer une augmentation ou une diminution de la richesse du mélange en vue de réduire le risque de cliquetis.

Le réglage du débit d'injection par coup de piston à l'aide d'un moteur électrique 40 contrôlé par le circuit électronique 53 permet de travailler avec le mélange carburé optima soit pour la puissance du moteur, soit pour son rendement dans le cas de la marche en mélange pauvre. Ces divers réglages pourraient être modifiés à l'aide d'un potentiomètre agissant sur l'un ou plusieurs des amplificateurs du circuit électronique 53 et réglable depuis le tableau de bord du véhicule pour permettre au pilote du véhicule de choisir l'une ou l'autre de ces options (puissance ou rendement) selon ses besoins.

Bien entendu, la présente invention n'est pas limitée aux modes de réalisation décrits et représentés et elle est susceptible de nombreuses variantes accessibles à l'homme de l'art, sans que l'on ne s'écarte de l'esprit de l'invention.

Ainsi le dispositif selon l'invention qui paraît devoir s'appliquer par priorité aux moteurs à combustion interne à allumage commandé peut également être transposé aux moteurs de type diésel à injection directe de carburant dans la chambre des cylindres ou indirecte dans une chambre de combustion reliée à la chambre principale du cylindre.

0091359

REVENDICATIONS

1.- Dispositif de régulation de l'alimentation en carburant d'un moteur à combustion interne, du type comportant une pompe d'injection où la course des pistons d'injection est réglée par un plateau de butée dont la position est contrôlée en fonction de la masse d'air admise par cycle dans les cylindres du moteur, caractérisé en ce que le plateau de butée (8) est positionné par l'intermédiaire d'un moteur électrique (40) alimenté par un circuit électronique de calcul et de contrôle (53) sensible à la masse d'air admise par cycle dans les cylindres du moteur, tandis que sa position est repérée par un moyen électrique et/ou électronique, tel qu'un potentiomètre de recopie (24), apte à retransmettre en permanence au circuit électronique (53) la position du plateau (8).

2.- Dispositif de régulation selon la revendication 1, caractérisé en ce que le circuit électronique de calcul et de contrôle (53), pour assurer le réglage de la position du plateau (8), reçoit les informations relatives aux paramètres suivants :
- pression absolue de l'air (P2) à l'entrée du moteur,
- température de l'air (T2) à l'entrée du moteur,
- vitesse de rotation (N) du moteur,
- pression absolue des gaz d'échappement (P3) à la sortie du moteur.

3.- Dispositif de régulation selon la revendication 2, caractérisé en ce que dans le cas où le moteur à combustion interne est suralimenté par l'énergie des gaz d'échappement agissant sur un organe approprié tel qu'au moins un groupe turbo-compresseur, le circuit électronique reçoit, en plus, l'information relative à la température des gaz d'échappement (T3) à l'entrée de l'organe de suralimentation, tel que la turbine du turbo-compresseur, et commande une augmentation de la richesse en carburant du mélange carburé introduit dans les cylindres du moteur, lorsque la température des gaz d'échappement dépasse une valeur de consigne(T3c).

4.- Dispositif de régulation selon l'une des revendications 2 à 3, caractérisé en ce que l'information de pression de l'air à l'entrée du moteur est acquise à l'aide d'un capteur tel qu'un capteur piézo-résistif et traitée dans un amplificateur opérationnel (16), apte à ajuster sa tension de sortie proportionnellement à la pression absolue de l'air.

5.- Dispositif de régulation selon la revendication 4, caractérisé en ce que la tension de sortie de l'amplificateur opérationnel (16)
est adressée à un organe sommateur (15) qui ajoute à cette tension de
sortie une tension de correction délivrée par une chaîne de traitement
et de calcul qui reçoit l'information de pression des gaz d'échappement
(P3) et la transmet à un amplificateur à gain variable (A13) sensible à
l'information de vitesse de rotation (N) du moteur par l'intermédiaire
d'une résistance de contre-réaction variable.

6.- Dispositif de régulation selon la revendication 5, caractérisé en ce que la tension de sortie de l'organe sommateur (15) est amplifiée dans un amplificateur à gain variable (17) dans lequel la résistance de la boucle de contre-réaction est fonction de la température de
l'air (T2) à l'entrée du moteur, par tout moyen approprié tel que le
montage dans la boucle de contre-réaction d'une thermistance sensible à
cette température (T2) à l'entrée du moteur.

7.- Dispositif de régulation selon la revendication 6, caractérisé en ce que l'amplificateur à gain variable (17) comporte à son entrée
inverse une résistance variable en fonction de la vitesse de rotation
(N) du moteur.

8.- Dispositif de régulation selon l'une des revendications 4 à
7, caractérisé en ce que l'information issue de l'amplificateur opérationnel (16) est adressée à un comparateur de coupure (18) de l'information relative à la température des gaz d'échappement (T3) à l'entrée de
l'organe de suralimentation et adressée sous forme de signal de température d'échappement à un comparateur (18a) pour être comparée à une valeur
de température de consigne (T3c), cette comparaison déclenchant, lorsque
la pression absolue de l'air à l'entrée du moteur dépasse une valeur
minimale (P2c), l'application à l'amplificateur opérationnel (16) fonctionnant en sommateur avec l'information de pression (P2) d'un signal
proportionnel au dépassement de cette température de consigne (T3c) par
la température (T3) des gaz d'échappement.

9.- Dispositif de régulation selon l'une des revendications 6
à 8, caractérisé en ce que la sortie de l'amplificateur à gain variable
(17) est reliée, après ajustement éventuel dans un amplificateur de gain
(22) du point zéro et du gain global, à un organe comparateur (23) travaillant en boucle ouverte et apte à comparer l'information issue de

0091359

l'amplificateur de gain (22) avec l'information de position du plateau (8) délivrée par le potentiomètre de recopie (24), pour produire un signal d'actionnement (26, 27) du moteur électrique (40) de déplacement du plateau (8), signal dont la polarité de la tension détermine la rotation du moteur (40) dans le sens propre à supprimer le signal d'actionnement.

10.- Dispositif de régulation selon la revendication 9, caractérisé en ce que l'information de position délivrée par le potentiomètre de recopie (24) est dérivée et réinjectée dans l'amplificateur à gain variable (22) par tout moyen tel qu'un condensateur (36), en vue d'amortir les déplacements du moteur électrique (40).

11.- Dispositif selon la revendication 9 ou 10, caractérisé en ce qu'une fréquence de forme générale triangulaire (32) et de l'ordre du kilohertz (kHz) est injectée dans l'amplificateur de gain (22) pour augmenter l'impédance apparente du moteur électrique (40) de déplacement du plateau (8).

0091359

FIG.1

FIG.2

FIG.3

FIG.4

**0091359**

Office européen
des brevets

**RAPPORT DE RECHERCHE EUROPEENNE**

Numéro de la demande

EP  83 40 0649

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | FR-A-2 452 608  (PIERBURG GmbH & CO. KG.)<br>* Page 1, lignes 1-8; page 2, lignes 13-26; page 3, lignes 13-35; page 6, ligne 25 - page 7, ligne 24; figure 3 *<br><br>--- | 1-3,10 | F 02 D  5/02<br>F 02 M  59/30 |
| Y | FR-A-2 369 422  (ROBERT BOSCH GmbH)<br>* Page 4, ligne 24 - page 5, ligne 9; page 6, ligne 6 - page 7, ligne 2; page 8, ligne 19 - page 10, ligne 15; figures 1,9 *<br><br>--- | 1-3,10 | |
| A | US-A-3 903 852  (A. SOLA)<br>* Colonne 2, ligne 45 - colonne 3, ligne 28; colonne 4, lignes 15-37; figures 1,2 *<br><br>--- | 1,2,9 | |
| A | US-A-4 112 879  (ASSENHEIMER et al.)<br>* Colonne 8, lignes 29-51; figures 15-17 *<br><br>----- | 4 | |

**DOMAINES TECHNIQUES RECHERCHES (Int. Cl. ³)**

F 02 D  5
F 02 M  59/30

Le présent rapport de recherche a été établi pour toutes les revendications

| Lieu de la recherche | Date d'achèvement de la recherche | Examinateur |
|---|---|---|
| LA HAYE | 07-07-1983 | MOUALED R. |